# FASCICULE DE BREVET EUROPEEN

(11) **EP 1 785 649 B1**
(45) Date de publication et mention de la délivrance du brevet: **25.03.2009**
(21) Numéro de dépôt: 06124098.2
(22) Date de dépôt: 15.11.2006
(51) Int. Cl.: F16J 15/44, F01D 11/00, B23H 9/10

(54) **Pièce thermomécanique de turbomachine de révolution, léchette annulaire, et son procédé de fabrication**
Rotationssymmetrisches thermomechanisches Teil einer Turbomaschine, ringförmige Labyrinthschneidendichtung und sein Herstellungsverfahren
Rotationally symmetrical thermomechanical part of a turbomachine, annular knife edge sealing and its manufacturing method

(30) Priorité: 15.11.2005 FR 0511577
(43) Date de publication de la demande: 16.05.2007
(73) Titulaire: SNECMA, 75015 Paris (FR)
(72) Inventeur: Mons, Claude, 77176 Savigny le Temple (FR); Vigneau, Joël, 91750 Champcueil (FR)
(74) Mandataire: Cardy, Sophie Marie

(56) Documents cités:
- WO-A-20/05053860
- DE-A1- 4 341 216
- DE-A1- 19 957 771
- DE-C- 474 361
- US-A- 3 537 713
- US-B1- 6 478 304

## Description

L'invention concerne une pièce thermomécanique de turbomachine de révolution autour d'un axe longitudinal, comprenant au moins une léchette annulaire destinée à un labyrinthe d'étanchéité, et son procédé de fabrication.

Un labyrinthe d'étanchéité, encore appelé joint labyrinthe, comprend une partie tournante à ailettes (ou léchettes) avec un alésage statique recouvert d'un matériau abradable mou, ou une structure en nid d'abeilles capable de résister à des températures élevées. Au démarrage du moteur, les ailettes du joint frottent légèrement contre la garniture, mordant dans cette dernière, ce qui aboutit à un écartement minimum. Ce jeu varie au cours des différents cycles de vol, selon la dilatation des pièces et la souplesse naturelle des parties mobiles.

Les léchettes de labyrinthes permettent d'assurer les étanchéités aérodynamiques entre des enceintes d'air sous des pressions différentes. Elles sont en général situées sur la partie rotor en vis-à-vis de parties statoriques. Elles sont constituées principalement de « lames » continues ou segmentées de forme annulaire, pouvant être dirigées radialement vers l'intérieur ou vers l'extérieur.

En particulier, lorsqu'elles présentent une forme continue, les léchettes sont susceptibles d'entrer en contact avec le stator dans certaines configurations de fonctionnement. Pour éviter leur destruction dans ces situations, on équipe les stators de revêtements permettant l'interface et qui sont dénommés « abradables ». Dans ce cas, les séquences usuelles de pénétration des léchettes dans les abradables consistent en une coupe radiale associée à un déplacement axial («chariotage»).

Les matériaux abradables usuels peuvent se révéler en réalité relativement abrasifs, particulièrement vis-à-vis de certaines léchettes continues, surtout si celles-ci sont réalisées en alliage à base de titane, mais aussi en acier ou en alliage à base de nickel. C'est notamment particulièrement vrai pour les abradables réalisés sous la forme de nids d'abeilles en alliage réfractaire.

Pour éviter les détériorations, voir les destructions, des léchettes, habituellement on revêt celles-ci par projection thermique (torche à plasma, à flamme oxygène à haute vitesse HVOF, ...) d'un dépôt abrasif de type alumine/bioxyde de titane ou carbure, par exemple sur une sous-couche d'alliage aluminium et nickel, pour en assurer l'adhérence.

Le dépôt par projection thermique requiert de respecter des angles relatifs de projection entre l'axe de la torche et les surfaces des pièces à revêtir, de manière à ce que l'impact des particules projetées soit le plus orthogonal possible par rapport à la surface à revêtir afin d'obtenir une qualité et une adhérence du dépôt satisfaisantes. Également, cette technique exige une distance minimale entre l'outil de projection et la surface : en effet la zone centrale chaude du dard de la torche est à plusieurs milliers de degrés centigrades et il faut donc la tenir suffisamment éloignée de la pièce ; en outre, les particules à déposer doivent être suffisamment accélérées pour adhérer sur les surfaces à protéger.

Par ailleurs, les gaz propulseurs ou plasmagènes utilisés pour la projection doivent pouvoir être aisément évacués sans toutefois «souffler» la poudre projetée en créant des turbulences.

Le document DE 199 57 771 concerne un procédé de réparation d'une léchette d'étanchéité annulaire pour un disque de turbine dans lequel on procède à l'ajout de matière le long de toute la circonférence de la léchette par fusion d'une poudre métallique au moyen d'un faisceau laser.

En général, les léchettes sont orientées quasiment de façon orthogonale aux surfaces cylindriques des rotors, et elles sont souvent situées au voisinage de toiles de disques ou de labyrinthes, au fond de cavités ou à proximité d'autres léchettes lorsqu'elles sont disposées en série.

Parmi ces situations, nombreux sont les cas qui présentent un agencement géométrique qui rend la réalisation de dépôt par projection thermique très aléatoire ou quasiment impossible.

Il en résulte que le revêtement abrasif est déposé préférentiellement uniquement sur l'extrémité (pointe) de la léchette dont les parois sont finalement mal protégées, ce qui entraîne une usure plus rapide de la léchette.

C'est le cas dans le document US 3 537 713 qui se rapporte à des léchettes d'étanchéité annulaires qui portent un revêtement abrasif uniquement le long de l'extrémité de leur circonférence.

La présente invention a pour but de surmonter cet inconvénient en proposant une solution qui permette de s'affranchir de la réalisation de dépôt par projection thermique afin de pouvoir tout de même réaliser des léchettes qui ne sont pas endommagées par leur contact avec la couronne d'abradable.

Ce but de l'invention est atteint, pour une pièce thermomécanique de turbomachine de révolution autour d'un axe longitudinal, comprenant au moins une léchette annulaire destinée à un labyrinthe d'étanchéité, ladite léchette étant revêtue par un matériau abrasif,
par le fait que la pièce thermomécanique de turbomachine est équipée d'une léchette qui présente en direction radiale une hauteur variable le long de sa circonférence en formant plusieurs parties radialement en saillie entre lesquelles subsiste un intervalle et qui présentent chacune une hauteur augmentant progressivement depuis un intervalle jusqu'à une pointe et diminuant progressivement depuis ladite pointe jusqu'à l'intervalle suivant.

De cette façon, on comprend que la léchette ne forme plus une lame continue présentant une hauteur constante, mais que du fait de la présence des parties en saillie distinctes, c'est-à-dire d'un profil tranversal de léchette ayant un contour extérieur non circulaire, elle présente, outre la fonction d'étanchéité, également un aspect « outil de coupe ». De cette façon, en outre, on peut éventuellement se passer du dépôt d'un revêtement abrasif.

En effet, on propose donc de remplacer une lame continue, de section constante, revêtue d'un dépôt de protection également continu obtenu par projection thermique, par une léchette formé d'une lame continue ou discontinue comportant des éléments abrasifs ou coupants résultants des différentes parties en saillie réparties sur différents secteurs angulaires.

En particulier, on prévoit que la léchette forme un anneau de forme discontinue en section présentant le long de sa circonférence plusieurs parties en saillie entre lesquelles subsiste un intervalle.

De cette façon, on forme directement dans le volume de la léchette des dents de scie qui pourront entamer plus facilement le matériau abradable qu'une léchette formée d'une lame continue.

L'invention concerne aussi un procédé de fabrication d'une léchette annulaire destinée à un labyrinthe d'étanchéité, sur une pièce thermomécanique de turbomachine de révolution autour d'un axe longitudinal.

L'invention a pour but de proposer un procédé permettant de manière simple de fabriquer une telle léchette sans recourir à un dépôt par projection thermique.

A cet effet, on propose un procédé de fabrication d'une léchette annulaire sur un support thermomécanique, en particulier pour un labyrinthe d'étanchéité, comportant les étapes suivantes :
a) on fournit un support de révolution autour d'un axe longitudinal présentant une base de léchette annulaire,
b) on fournit au moins une source d'un matériau en poudre et une buse de projection reliée à ladite source et apte à se déplacer par rapport au support,
c) on fournit une source laser reliée à une tête optique apte à se déplacer par rapport au support pour focaliser le faisceau laser sur un point de la surface du support, le procédé de fabrication étant caractérisé en ce qu'il comporte en outre les étapes suivantes :
d) on règle la tête optique et la buse sur un même point de la surface du sommet de la base de la léchette,
e) on active la source laser et la source de matériau en poudre, ce par quoi on forme un bain de fusion localisé au niveau dudit point, dans lequel est injecté le matériau en poudre d'où il en résulte la formation d'une surépaisseur localisée ;
f) on règle la tête optique et la buse sur autre point de la surface du sommet de la base adjacent à ladite surépaisseur localisée et on retourne à l'étape e) tant que la couche de matière n'est pas terminée pour le secteur angulaire considéré ladite léchette comportant plusieurs secteurs angulaires contenant chacun une partie en saillie et ladite léchette présentant en direction radiale une hauteur variable le long de sa circonférence en formant plusieurs parties en saillie.
g) on construit chaque partie en saillie de la léchette par le dépôt successif de couches de plus en plus étroites en direction longitudinale sur la surface du sommet de la base, chaque couche résultant de la réalisation des étapes d) à f).

On comprend de ce qui précède qu'il est proposé de remplacer le dépôt, sur la surface de la léchette préalablement usinée, d'un revêtement abrasif réalisé par projection thermique, par une construction complète de cette léchette, ou tout du moins une partie de la hauteur de la pointe de cette léchette, en ayant recours à une projection laser.

En outre, on réalise différentes parties en saillie réparties sur différents secteurs angulaires, ce qui créé un profil tranversal de léchette ayant un contour extérieur non circulaire, de sorte que la léchette présente, outre la fonction d'étanchéité, également un aspect « outil de coupe ».

La projection laser consiste à créer sur la pièce un bain de fusion très localisé, par action d'un faisceau laser pouvant être réglé de façon très précise, et à injecter dans ce bain de fusion de la poudre (métallique et/ou céramique), qui peut être abrasive. Ainsi, contrairement à la projection thermique, il n'est pas nécessaire de chauffer la poudre, sa trajectoire pouvant donc être dissociée de celle du faisceau laser.

Le faisceau laser se propage depuis sa source jusqu'à la cible par un chemin optique. Ce chemin optique est matérialisé soit pas une succession de miroirs qui reçoivent le faisceau et le renvoient dans une direction différente et de lentilles optiques et qui le font converger ou diverger ou le maintiennent parallèles, soit pas une fibre optique.

Dans les deux cas, le chemin optique se termine par un système de lentilles appelées « tête optique » qui fait converger le faisceau en un point plus ou moins éloigné. Des zones peu accessibles de la pièce avec le dispositif à torche utilisé pour réaliser une projection thermique peuvent maintenant être atteintes par un dispositif à projection laser, dès lors qu'il n'y a pas d'obstacle entre la tête optique et le point d'impact visé par le faisceau sur la pièce. En effet, dans le cas d'une projection thermique, il est nécessaire que la poudre arrive avec une direction d'impact normale à la surface à revêtir. De façon tout à fait différente, avec le procédé proposé selon la présente invention, la projection laser ne nécessitant que le remplissage du bain de fusion, la poudre peut être envoyée avec des trajectoires tout à fait variables par rapport à la surface de réception.

La poudre métallique est distribuée par un distributeur de poudre. Elle chemine dans un tube dont l'extrémité comporte une buse qui dirige la poudre vers le bain de fusion créé par le faisceau laser. Ce tube peut être souple est guidé par un bras rigide support ou par un robot ou tout autre dispositif de positionnement, ou bien elle peut être rigide et orientée vers la zone à revêtir de la pièce.

On peut relever d'autres différences entre les procédés de projection thermique et de projection laser.

Dans le cas de la projection thermique, la buse transmettant les gaz chauds doit être proche de la surface à revêtir, tandis que dans le cas de la projection laser, la tête optique peut être relativement éloignée de cette surface. Dans le cas de la projection thermique, la poudre doit être chauffée de sorte qu'elle doit présenter une trajectoire commune avec les gaz chauds, ce qui n'est pas le cas avec une projection laser dans laquelle la trajectoire de la poudre peut être dissociée de celle du faisceau laser.

En outre, dans le cas de la projection thermique, on réalise un procédé de revêtement continu alors que dans le cas d'une projection laser, compte tenu de la souplesse de commande du faisceau laser, il est possible de réaliser la projection de façon continue ou de façon séquentielle, par un simple arrêt du faisceau laser.

En outre, on comprend que la solution conforme à la présente invention évite d'avoir à usiner la pointe de la léchette, qui est un emplacement relativement délicat à réaliser. En effet, grâce au procédé conforme à la présente invention, on construit simultanément, couche par couche, la pointe de la léchette, ainsi que son éventuel revêtement réalisé avec un autre matériau suffisamment abrasif.

À cet égard, il faut noter que ce procédé peut réaliser la construction de la léchette sur toute sa hauteur (dans ce cas, la base de léchette annulaire est simplement un tronçon annulaire de la surface extérieure du support, par exemple du rotor) ou bien uniquement la construction de la léchette sur une partie de sa hauteur formant son extrémité ou sa pointe (dans ce cas, la base de léchette annulaire présente un volume annulaire s'étendant sur une certaine hauteur et provient d'un usinage préalable).

Dans l'étape e) l'activation de la source laser et de la source de matériau en poudre est effectuée successivement ou quasi simultanément afin que le bain de fusion localisé soit présent à l'emplacement sur lequel est dirigé le faisceau laser lorsque la poudre, qui arrive sur ce même emplacement, vient impacter cette surface.

En effet, il est préférable de construire chaque partie saillante de la léchette strate par strate, en réalisant en premier lieu une nouvelle couche sur toute la surface du sommet du secteur angulaire considéré de la léchette avant de continuer cette construction radialement plus à l'extérieur.

Néanmoins, on peut concevoir d'autres méthodes de construction de chaque partie saillante de la léchette, parmi lesquels la construction couche par couche d'un secteur angulaire avant de poursuivre la construction d'un autre secteur angulaire, et ainsi de suite pour former une partie saillante complète, ou encore, au moyen de plusieurs têtes optiques et de plusieurs buses, la fabrication simultanée de plusieurs secteurs angulaires de la léchette et/ou de la partie saillante de la léchette.

De préférence, pendant l'étape g), pour chaque partie en saillie, les couches sont de plus en plus réduites en direction circonférentielle.

De cette façon, chaque partie en saillie présente une étendue circonférentielle de plus en plus réduite en direction radiale vers l'extérieur, d'où il en résulte une forme de pointe.

Avantageusement, pendant l'étape g) les couches restent centrés autour d'une zone angulaire distante des deux intervalles adjacents à la partie en saillie et destinée à former la pointe de la partie en saille. Dans ce cas, la pointe est distante des deux extrémités circonférentielles de chaque partie en saillie.

Alternativement, pendant l'étape g) les couches recouvrent une extrémité circonférentielle de la partie en saillie. Dans ce cas, la pointe est située sur l'une des deux extrémités circonférentielles de chaque partie en saillie ce qui lui donne une forme de dent de scie.

De préférence, pendant l'étape f), on parcourt la surface du sommet de la base de la léchette selon une direction longitudinale avant de changer de secteur angulaire.

Dans ce cas, pour chaque partie en saillie, on construit chaque couche ligne par ligne en déplaçant, le long de cette ligne, le réglage de la tête optique et de la buse (ou en déplaçant le support par rapport à l'appareillage de projection laser) parallèlement à la direction longitudinale parallèle à l'axe de révolution, avant d'effectuer un décalage angulaire et de commencer une nouvelle ligne jusqu'à la fin de la réalisation d'une couche.

Bien entendu, on peut concevoir d'autres trajectoires de déplacement pour construire chaque couche, par exemple en effectuant, à la suite les uns des autres, la fabrication de cordons annulaires incomplets (ou tronçons angulaires de cordons annulaires) qui seront décalés légèrement en direction longitudinale les uns par rapport aux autres.

Selon une autre disposition préférentielle, au cours de l'étape f) la source laser et la source de matériau en poudre restent activées.

De cette façon, on peut réaliser en continu la construction de la léchette par formation d'îlots successifs de matière, soit pour la formation complète de la léchette, soit par séquence correspondant chacune à la fabrication d'une partie (par exemple une couche complète de la léchette ou une partie saillante formant une dent). Alternativement ou en combinaison avec ces différentes possibilités, on peut également, notamment dans les zones les plus délicates à atteindre et/ou les plus fines au niveau des dimensions, réaliser un dépôt de matière point après point en désactivant la source laser et la source de matériau au cours de l'étape f).

De préférence, ledit support est une pièce thermomécanique de turbomachine de révolution autour d'un axe longitudinal (X-X'), en particulier le rotor d'une turbomachine.

En outre, de préférence, dans l'étape f), le secteur angulaire considéré délimite une partie en saillie entre deux intervalles. Dans ce cas, chaque secteur angulaire considéré délimite une partie en saillie différenciée sur toute la hauteur de la léchette.

La description se réfère aux dessins annexés sur lesquels :
- la figure 1 montre une demi coupe axiale d'un rotor de turbine d'un turboréacteur avec la disposition du flasque et des labyrinthes d'étanchéité en amont des injecteurs principaux,
- les figures 2 et 3 représentent une vue en coupe axiale schématique partielle et agrandie d'une pièce thermomécanique de révolution montrant l'évolution de la section transversale et du profil de la léchette lors d'une mise en oeuvre du procédé conforme à la présente l'invention,
- la figure 4 représente une vue en coupe transversale d'une pièce thermomécanique de révolution montrant le flanc d'une léchette qui peut être réalisée avec le procédé de fabrication de la présente invention, et
- la figure 5 est une vue similaire à celle de la figure 4 pour une variante de réalisation, conformément à la présente invention.

La présente invention portant sur des léchettes d'étanchéité d'une pièce thermomécanique de révolution de turboréacteur, en particulier pour un rotor, on décrit ci-après une application possible, non limitative, de cette forme de léchette conforme à la présente invention.

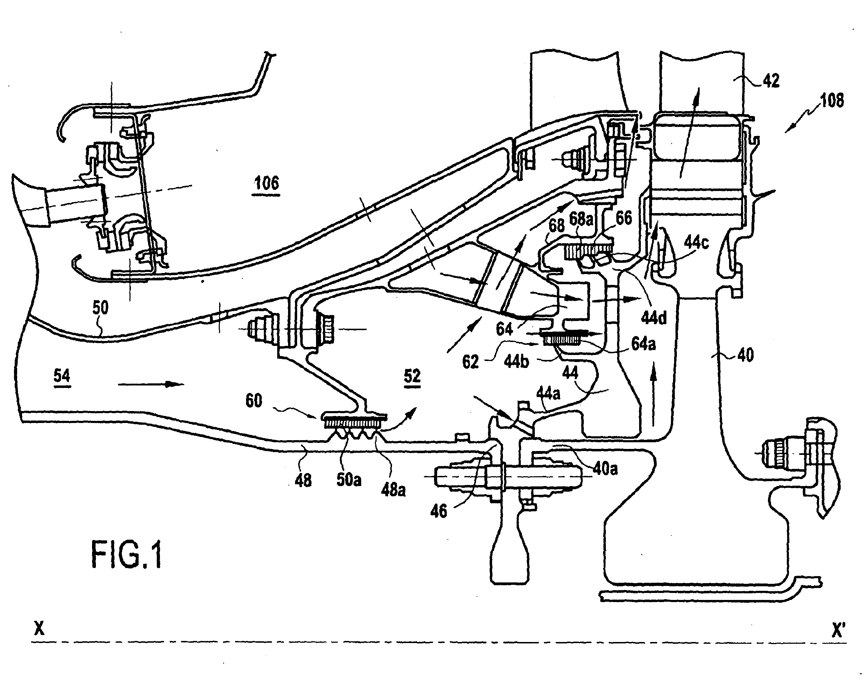

La figure 1 représente un cas dans lequel les léchettes sont utilisées dans les labyrinthes étanchéité et sont disposées en face d'éléments abradables. Il s'agit du cas du circuit de ventilation d'une turbine à haute pression disposée en aval d'une chambre de combustion 106.

En particulier, on y trouve une turbine 108 avec son rotor de révolution, mobile en rotation autour d'un axe X-X'.

Le rotor de la turbine 108 comporte un disque de turbine 40 équipé d'aubes 42, et un flasque 44 disposé en amont du disque 40. Le disque 40 et le flasque 44 comportent chacun une bride amont, référencée 40a pour le disque 40 et 44a pour le flasque 44, pour leur fixation à l'extrémité aval 46 du cône aval 48 du compresseur haute pression entraîné par le rotor de la turbine 108.

Cet agencement de circuit de refroidissement comporte trois labyrinthes successifs de décharge.

Un premier labyrinthe de décharge 60 est formé en amont de l'enceinte 52 séparant le flasque 44 du fond de chambre et en aval de l'enceinte 54 séparant le cône aval 48 du compresseur à haute pression du carter intérieur 50 de la chambre de combustion 106. Ce premier labyrinthe de décharge 60 comprend des léchettes 48a formée sur le cône aval 48 et une couronne 50a de matériau abradable montée à l'extrémité d'un flasque solidaire du carter intérieur 50.

Un deuxième labyrinthe de décharge 62 est situé sous des injecteurs 64, en aval de l'enceinte 52. Ce deuxième labyrinthe de décharge 62 est formé de léchettes 44b du flasque 44 et d'une couronne de matériau abradable 64a montée sur les injecteurs 64.

Le troisième labyrinthe de décharge 66 est situé au-dessus des injecteurs 64, et comporte trois léchettes 44c successives formées sur une portion coudée 44d du flasque 44 et une couronne d'étanchéité abradable 68a montée sur le carter intérieur 68.

Selon l'invention, toutes ou une partie de ces différentes léchettes 48a, 44b et 44c ne sont pas revêtues par projection thermique mais sont construites par projection laser et elles présentent une forme avec une épaisseur variable le long de leur circonférence, et non une forme d'anneau d'épaisseur constante.

Sur la figure 1, l'application de la présente invention est représentée en relation avec une turbine haute pression. Toutefois, il faut comprendre que la présente invention peut être mise en oeuvre dans d'autres zones d'une turbomachine, notamment dans un compresseur haute pression, un compresseur basse pression ou une turbine basse pression.

Également, sur la figure 1, les léchettes sont disposées sur un rotor mobile en étant toutes dirigées radialement en direction de l'extérieur. Cependant, on conçoit tout à fait que la présente invention peut également s'appliquer à des léchettes dirigées radialement en direction de l'axe de rotation.

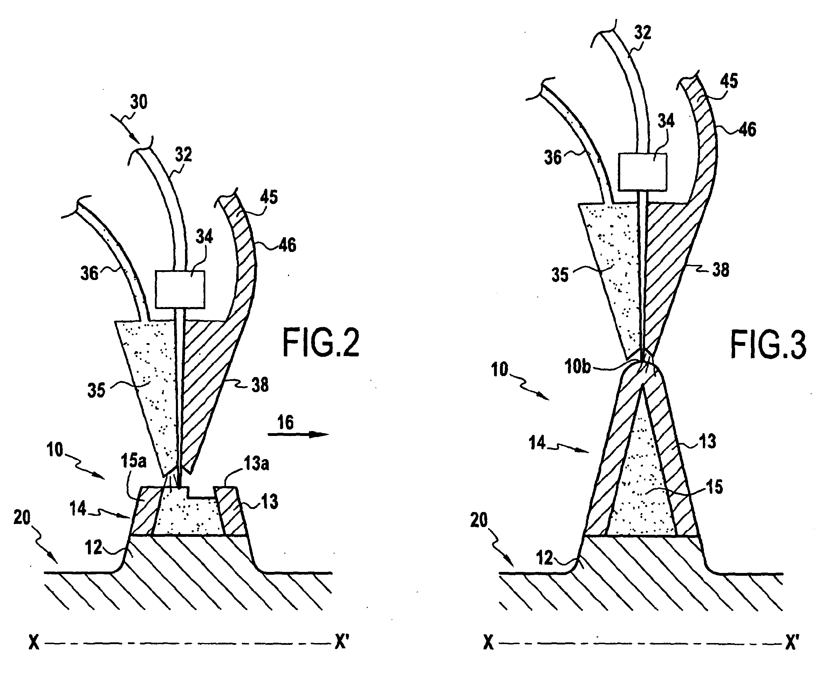

À titre d'exemple, un mode de réalisation conforme à la présente invention va maintenant être décrit en relation avec les figures 2 à 4.

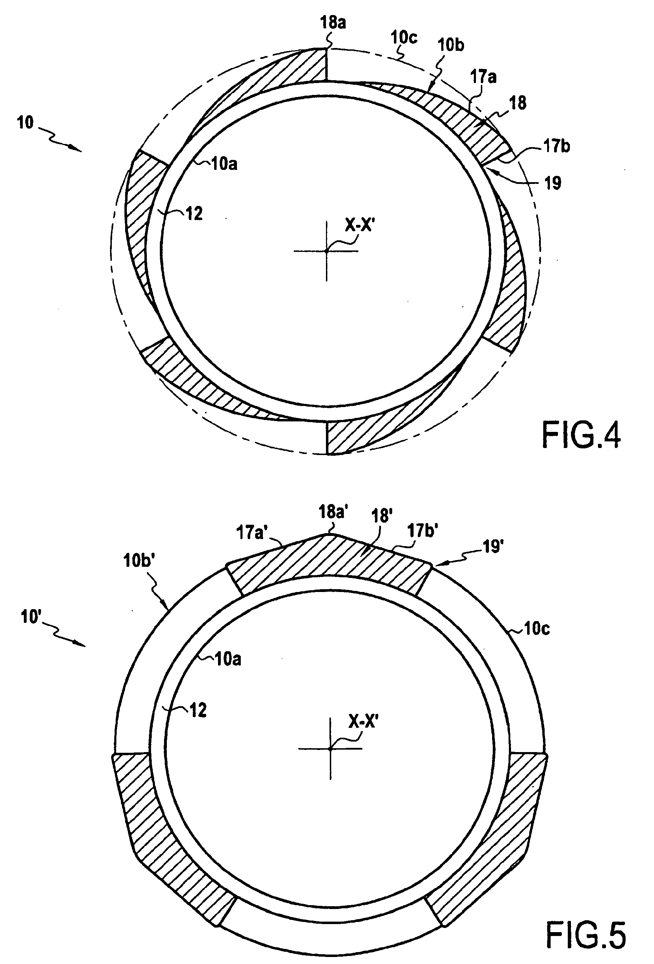

Sur la figure 4, on retrouve l'axe de rotation X-X' autour duquel s'étend radialement une léchette 10 présentant un contour intérieur circulaire 10a d'axe X-X' et un contour extérieur 10b circonscrit dans un cercle 10c d'axe X-X' indiqué en traits mixtes. On peut considérer que le cercle 10c forme le contour extérieur d'une léchette annulaire conforme à l'art antérieur, c'est-à-dire qui présente une hauteur constante le long de sa circonférence.

Ici, le contour extérieur 10b présente la forme de six lignes sensiblement courbes 17a, réparties chacune sur un angle de 60°, et dont la distance par rapport à l'axe X-X' varie progressivement dans le même sens en augmentant dans le sens horaire sur la figure 4 . Ces six lignes courbes 17a prolongeant la base 12 délimitent, avec six lignes radiales 17b, des dents 18 entre des intervalles 19 formant une rupture de la hauteur de la léchette 10.

De cette façon, chaque partie en saillie est formée d'une dent 18 qui présente une hauteur variant progressivement dans le même sens depuis un intervalle 19 jusqu'à l'intervalle 19 suivant.

Il faut noter que les lignes 17b ne sont pas forcément parallèles à un rayon mais que d'une manière générale, elles relient le sommet 18a de la dent (l'extrémité d'une ligne courbe 17a) à la base 12 ou à l'autre extrémité d'une ligne courbe 17a suivante.

Pour comprendre quelle forme présente précisément ce contour extérieur 10b, on se reportera maintenant aux figures 2 et 3 illustrant le procédé de fabrication par usinage de cette léchette 10.

En section longitudinale par rapport à l'axe X-X', le profil extérieur de la léchette 10 présente, comme il apparaît sur la figure 3, sensiblement une forme de V inversé ou de U inversé avec les branches du U inclinées en direction du sommet de la léchette délimité par le contour extérieur 10b.

Cette description correspond donc à la même forme en section qu'une léchette de l'art antérieur, c'est-à-dire avec un profil sensiblement en forme de U ou de V inversé. Par contre, ici, comme on l'a vu sur la figure 4, la léchette 10 n'est pas strictement annulaire, c'est-à-dire avec une hauteur constante le long de sa circonférence.

De plus, comme il a déjà été exposé précédemment, selon les techniques de l'art antérieur, la léchette est usinée directement dans le support selon la forme rappelée ci-dessus, puis cette léchette est revêtue par un dépôt réalisé par projection thermique afin de renforcer ses propriétés de résistance à l'abrasion.

Au contraire, selon la présente invention, le support 20 a seulement été usiné afin de réaliser une base 12 faisant saillie de la surface supérieure du support 20 au plus de quelques millimètres afin d'amorcer le début de la forme de la léchette 10.

Ensuite, on utilise, pour la fabrication du reste de la léchette 10, à savoir son extrémité ou pointe 14, formant des dents 18 dans le cas de la figure 4, un appareillage (non entièrement représenté) permettant de réaliser une projection laser.

Cet appareillage comporte les parties suivantes :
- un système permettant de saisir le support 20 et de le déplacer, notamment en rotation et en translation;
- une source laser (CO2 ou YAG) 30 avec un système de transmission du faisceau laser 32 par réflexion sur des miroirs ou par une fibre optique, jusqu'à une tête optique 34 ;
- la tête optique 34 présente une distance focale correspondant à la distance entre cette dernière et la surface à revêtir, cette tête optique 34 est solidaire d'un dispositif de positionnement capable de la placer de façon à ce que le point focal du faisceau puisse balayer tous les points d'une section droite de la surface à revêtir, ou du volume à construire ;
- au moins une source d'un premier matériau en poudre 35 comportant un distributeur et un doseur de poudre ainsi que le tuyau d'alimentation 36 de cette poudre jusqu'à la buse 38.

Dans le cas représenté on dispose également d'une source d'un deuxième matériau en poudre 45 reliée à la buse 38 par un tuyau d'alimentation 46 correspondant.

Ainsi, on comprend que de préférence, on fournit une première source d'un premier matériau en poudre 35 et une deuxième source d'un deuxième matériau en poudre 45, ladite première source et ladite deuxième source étant reliées à la buse de projection 38.

Dans le cas représenté schématiquement sur les figures 2 et 3, la tête optique 34 et la buse 38 forment un même ensemble, c'est-à-dire que la tête optique 34 et la buse 38 de projection sont solidaires l'une de l'autre dans un même ensemble de projection dont la position est réglable par rapport au support 20.

Cependant la buse 38 peut également être située séparément à côté du faisceau laser en étant supportée par un dispositif de positionnement qui lui est propre afin de lui permettre de suivre les mouvements du point de focalisation du faisceau laser.

En relation avec la figure 2, il faut comprendre que la construction de la pointe 14 de la léchette 10 s'effectue, pour chaque dent 18 formant une partie saillante, couche par couche jusqu'à l'extrémité libre de la pointe 14, c'est-à-dire le sommet 18a de cette dent, en délimitant le contour extérieur 10b.

Soit on réalise la construction de la léchette sur la base 12 dent par dent, et pour chaque dent 18 couche par couche, ou bien on peut également construire en même temps toutes les dents, en réalisant une couche donnée sur toutes les dents 18 avant de passer à la couche de matière du dessus.

De préférence, la hauteur de chaque dent 18, à savoir la distance radiale entre le sommet 18a et la base 12 est entre 1 mm et 12 mm.

Pour chaque couche, de préférence, on réalise en premier lieu par fusion du deuxième matériau en poudre 45 deux cordons angulaires 13a. Chaque cordon angulaire 13a est géométriquement formé par l'intersection entre un cordon annulaire et un secteur angulaire. Chaque cordon angulaire 13a s'étend le long des deux bords longitudinaux du sommet de la base 12 (ou de la couche réalisée précédemment), puis on remplit par apport du premier matériau en poudre 35 dans le bain de fusion localisé engendré par le faisceau laser, l'espace en forme de cuvette formé entre ces deux cordons angulaires, ce qui permet de construire une zone 15a qui va constituer au final l'âme 15.

De cette façon, couche par couche, les cordons angulaires 13a forment un revêtement 13 et les zones 15a forment l'âme 15 de la léchette 10.

De préférence, on s'arrange pour que le premier matériau en poudre 35 est identique à celui constituant le support et que le deuxième matériau en poudre 45 est plus dur que le premier matériau.

De cette façon, on obtiendra un revêtement 13 plus dur que l'âme 15.

On comprend donc que de préférence, au cours de l'étape g) chaque couche du secteur angulaire considéré résulte deux sous-étapes suivantes :
- on forme à la surface de la base 12 de la léchette 10 au moins deux cordons angulaires 13a avec le deuxième matériau en poudre 45 par le fait qu'au cours de l'étape précédente, la tête optique 34 et la buse 38 sont décalées légèrement angulairement sur la circonférence par rapport à la surépaisseur localisée obtenue précédemment, et
- on remplit la zone 15a située entre les deux cordons angulaires 13a avec le premier matériau en poudre 35.

La réalisation de chaque cordon angulaire 13a s'effectue donc en réalisant en continu le dépôt par projection laser en effectuant une rotation du support 20 autour de l'axe longitudinal X-X', sans déplacer longitudinalement le support 20.

Le remplissage de la cuvette délimitée entre les deux cordons angulaire 13a avec le premier matériau en poudre 35 peut être réalisé selon plusieurs possibilités parmi lesquelles :
- soit par un décalage angulaire formant petit à petit un cordon angulaire parallèle aux cordons 13a réalisés dans le deuxième matériau en poudre 45, puis un décalage longitudinal à chaque nouveau tour pour former un nouveau cordon angulaire,
- soit par un décalage longitudinal (flèche 16 de la figure 2) pour remplir la zone 15a selon une ligne longitudinale entre les deux cordons angulaires 13a et par un décalage angulaire avant de former une nouvelle ligne longitudinale en sens inverse pour remplir l'espace entre les deux cordons angulaires 13a par formation de secteurs angulaires successifs.

La représentation de la figure 2 correspond à l'aboutissement de la réalisation de plusieurs couches pour former une partie de la pointe 14 de la léchette 10 tandis que la figure 3 représente la dernière étape de réalisation au cours de laquelle la couche finale est suffisamment étroite pour que les deux cordons angulaires 13a se rejoignent.

Ainsi, sur la figure 3, la léchette annulaire 10 est formée d'une base 12 surmontée d'une pointe 14 composée, pour chaque dent 18, d'une âme 15 réalisée dans le même matériau que le support 20, et d'un revêtement 13 recouvrant toute l'âme 15 et réalisé dans un matériau différent de celui de l'âme 15.

Il faut noter que la présente invention recouvre également le cas dans lequel aucune base 12 n'est usinée au préalable dans le support 20, la réalisation de toute la hauteur de la léchette 10 étant effectuée par construction comme il a été décrit ci-dessus, la base 12 se réduisant dans ce cas (non représenté) à un tronçon annulaire de la surface extérieure du support 20.

Également, avec le même appareillage que celui présenté en relation avec les figures, on peut envisager de réaliser la construction de la pointe 14 de la léchette 10 en modifiant progressivement la composition du matériau depuis la surface extérieure formant le revêtement 13 vers l'âme 13 de la léchette 10 en faisant varier progressivement la proportion entre les premier et deuxième matériaux en poudre 35 et 45.

A cet effet, on active simultanément la première source et la deuxième source de matériaux en poudre 35, 45 de sorte que la buse 38 projette un mélange des deux matériaux en poudre, en prenant soin d'adapter les proportions afin que le revêtement 13 soit plus riche en deuxième matériau en poudre 45, afin de constituer un revêtement 13 plus dur que l'âme 15.

Dans ce cas, non représenté, la léchette annulaire 10 est formée d'une base 12 surmontée d'une pointe 14 dont la composition varie progressivement entre son âme 15 et sa surface 13.

En outre, le procédé conforme à la présente invention recouvre également le cas dans lequel on utilise une seule source de matériau en en poudre pour réaliser les différentes dents formant l'ensemble de la pointe 14 de la léchette 10.

On comprend que le procédé proposé selon la présente invention évite d'une part de réaliser un usinage délicat et d'autre part, lorsqu'on utilise deux matériaux différentes entre l'âme et la surface, d'effectuer un revêtement par un procédé de projection thermique qui ne peut pas être réalisé correctement dans certaines configurations géométriques.

Parmi les matériaux pouvant être employés, on utilise de préférence pour l'âme 15 un matériau en poudre métallique de même composition que le support 20, à savoir un alliage titane ou un alliage à base nickel et pour le revêtement 13, on utilise de préférence des matériaux durs et abrasifs. En particulier, pour le revêtement 13 on choisit parmi les métaux résistant à l'oxydation à chaud tels qu'un alliage de type MCrAlY (M étant un métal choisi parmi le nickel, le cobalt, le fer ou un mélange de ces métaux) ou un alliage à base de cobalt, chrome tungstène tel que le Stellite (marque déposée). En outre, on peut utiliser des céramiques comme le dioxyde de titane (TiO2), l'alumine (ALO2), la zircone (ZrO2) ou un mélange réalisé à partir de l'une d'entre elles.

En outre sur les dessins, on a représenté une léchette annulaire qui est dirigée radialement vers l'extérieur, mais on peut prévoir d'appliquer la présente invention également pour une léchette annulaire qui est dirigée radialement vers l'intérieur.

Dans la variante de la figure 5, la léchette 10' s'étend radialement entre un contour intérieur circulaire 10a et un contour extérieur 10b' comportant des tronçons angulaires circulaires 10c alternant avec des dents 18' (ici trois) surmontant la ligne du cercle des tronçons angulaires circulaires 10c au niveau du décrochement 19', ce qui forme une rupture dans la hauteur de la léchette 10.

Les dents 18' forment un pic depuis les deux décrochements 19' à partir desquels, en direction circonférentielle, la dent 18' est de plus en plus haute jusqu'à sont sommet 18a'.

Dans la variante de la figure 5, le procédé de fabrication est conformé à l'exposé qui précède en ce qui concerne les dents 18', hormis sur la forme en direction circonférentielle.

Par contre, en ce qui concerne les tronçons circulaires 10c formés entre chaque dent 18', la projection laser est réalisée avec le premier matériau 35 uniquement, avec une forme en section en coupe axiale identique pour la zone radialement interne , seules les dernières couches ayant une forme différente.

De préférence, la hauteur de chaque dent 18', à savoir la distance radiale entre le sommet 18a' et la base 12 est entre 1 mm et 12 mm, et la pointe 18a' de la dent 18' dépasse de 0,2 mm au plus le cercle circonscrit aux tronçons angulaires circulaires 10c.

Dans cette deuxième variante de réalisation suivant le procédé de l'invention, on constate que chaque partie en saillie est formée d'une dent 18 qui présente une hauteur augmentant progressivement depuis un intervalle 19' jusqu'à une pointe 18a' et diminuant progressivement depuis ladite pointe jusqu'à l'intervalle suivant 19'.

Pour les deux variantes de réalisation, on relève que la léchette forme un anneau discontinu présentant le long de sa circonférence plusieurs parties en saillie (18; 18') entre lesquelles subsiste un intervalle (19; 19') ou une rupture dans la hauteur.

De plus, pour les deux variantes de réalisation, on prévoit avantageusement que la léchette 10 ou 10' comporte au moins trois parties en saillie ou dents 18, 18'.

## Revendications

1. Pièce thermomécanique de turbomachine de révolution autour d'un axe longitudinal, comprenant au moins une léchette annulaire (10') destinée à un labyrinthe d'étanchéité, ladite léchette (10') étant revêtue par un matériau abrasif,
**caractérisée en ce que** la léchette (10') présente en direction radiale une hauteur variable le long de sa circonférence en formant plusieurs parties en saillie (18') entre lesquelles subsiste un intervalle (19') et qui présentent chacune une hauteur augmentant progressivement depuis un intervalle (19') jusqu'à une pointe et diminuant progressivement depuis ladite pointe jusqu'à l'intervalle (19') suivant.

2. Pièce thermomécanique selon la revendication précédente, **caractérisée en ce que** la léchette (10') forme un anneau discontinu présentant le long de sa circonférence plusieurs parties en saillie (18') entre lesquelles subsiste un intervalle (19') ou une rupture dans la hauteur.

3. Pièce thermomécanique selon la revendication 1 ou 2, **caractérisée en ce que** la léchette (10') comporte au moins trois parties en saillie (18').

4. Pièce thermomécanique selon l'une quelconque des revendications 1 à 3, **caractérisée en ce qu'**elle constitue le rotor d'une turbomachine.

5. Turbomachine comprenant une pièce thermomécanique selon l'une quelconque des revendications 1 à 4.

6. Procédé de fabrication d'une léchette (10; 10') annulaire sur un support (20) thermomécanique, en particulier pour un labyrinthe d'étanchéité, comportant les étapes suivantes :
a) on fournit un support de révolution autour d'un axe longitudinal présentant une base (12) de léchette (10 ; 10') annulaire,
b) on fournit au moins une source d'un matériau en poudre (35) et une buse de projection (38) reliée à ladite source et apte à se déplacer par rapport au support (20),
c) on fournit une source laser (30) reliée à une tête optique (34) apte à se déplacer par rapport au support (20) pour focaliser le faisceau laser sur un point de la surface du support (20),
le procédé de fabrication étant **caractérisé en ce qu'**il comporte en outre les étapes suivantes:
d) on règle la tête optique et la buse sur un même point de la surface du sommet de la base (12) de la léchette (10 ; 10'),
e) on active la source laser (30) et la source de matériau en poudre, ce par quoi on forme un bain de fusion localisé au niveau dudit point, dans lequel est injecté le matériau en poudre d'où il en résulte la formation d'une surépaisseur localisée ;
f) on règle la tête optique (34) et la buse (38) sur autre point de la surface du sommet de la base (12) adjacent à ladite surépaisseur localisée et on retourne à l'étape e) tant que la couche de matière n'est pas terminée pour le secteur angulaire considéré, ladite léchette (10; 10') comportant plusieurs secteurs angulaires contenant chacun une partie en saillie et ladite léchette présentant en direction radiale une hauteur variable le long de sa circonférence en formant plusieurs parties en saillie; et
g) on construit chaque partie en saillie de la léchette (10 ; 10') par le dépôt successif de couches de plus en plus étroites en direction longitudinale sur la surface du sommet de la base, chaque couche résultant de la réalisation des étapes d) à f).

7. Procédé selon la revendication 6, **caractérisé en ce que** pendant l'étape g) les couches sont de plus en plus réduites en direction circonférentielle.

8. Procédé selon la revendication 6 ou 7, **caractérisé en ce que** pendant l'étape g) les couches restent centrés autour d'une zone angulaire distante des deux intervalles (19; 19') adjacents à la partie en saillie (18; 18') et destinée à former la pointe de la partie en saille.

9. Procédé selon la revendication 6 ou 8, **caractérisé en ce que** pendant l'étape g) les couches recouvrent une extrémité circonférentielle de la partie en saillie (18; 18').

10. Procédé selon l'une quelconque des revendications 6 à 9, **caractérisé en ce que** pendant l'étape f), on parcourt la surface du sommet de la base (12) de la léchette (10 ; 10') selon une direction longitudinale avant de changer de secteur angulaire.

11. Procédé selon l'une quelconque des revendications 6 à 10, **caractérisé en ce que** au cours de l'étape f) la source laser (30) et la source (35;45) de matériau en poudre restent activées.

12. Procédé selon l'une quelconque des revendications 6 à 11, **caractérisé en ce que** pendant l'étape b) on fournit une première source (35) d'un premier matériau en poudre et une deuxième source (45) d'un deuxième matériau en poudre, ladite première source (35) et ladite deuxième source (45) étant reliées à la buse (38) de projection.

13. Procédé selon la revendication 12, **caractérisé en ce que** le premier matériau (35) est identique à celui du support (20) et **en ce que** le deuxième matériau (45) est plus dur que le premier matériau (35).

14. Procédé selon la revendication 12 ou 13, **caractérisé en ce qu'**au cours de l'étape g) chaque couche du secteur angulaire considéré résulte des sous-étapes suivantes :
g1) on forme à la surface de la base (12) de la léchette (10 ; 10') (10) au moins deux cordons angulaires (13a) avec le deuxième matériau en poudre (45) par le fait qu'au cours de l'étape f) la tête optique (34) et la buse (38) sont décalées angulairement sur la circonférence par rapport à la surépaisseur localisée obtenue précédemment, et
g2) on remplit une zone (15a) située entre les deux cordons angulaires (13a) avec le premier matériau en poudre (35).

15. Procédé selon l'une quelconque des revendications 12, 13 et 14, **caractérisé en ce que** pendant l'étape e) on active simultanément la première source (35) et la deuxième source (45) de matériau en poudre de sorte que la buse (38) projette un mélange des matériaux en poudre.

16. Procédé selon l'une quelconque des revendications 6 à 15, **caractérisé en ce que** la tête optique (34) et la buse (38) de projection sont solidaires l'une de l'autre dans un même ensemble de projection dont la position est réglable par rapport au support (20).

17. Procédé selon l'une quelconque des revendications 6 à 16, **caractérisé en ce que** ledit support (20) est une pièce thermomécanique de turbomachine de révolution autour d'un axe longitudinal (X-X').

18. Procédé selon l'une quelconque des revendications 6 à 17, **caractérisé en ce que** dans l'étape f), le secteur angulaire considéré délimite une partie en saillie (18; 18') entre deux intervalles (19; 19').

## Claims

1. A thermomechanical turbomachine part that is circularly symmetrical about a longitudinal axis, comprising at least one annular wiper (10') for a sealing labyrinth, said wiper (10') being coated with an abrasive material,
**characterized in that** the wiper (10') presents height in a radial direction that varies around its circumference, forming a plurality of projecting portions (18') between which remains a gap (19') and each presenting a height that increases progressively from a gap (19') to a tip and that decreases progressively from said tip to the following gap (19').

2. A thermomechanical part according to the previous claim, **characterized in that** the wiper (10') forms a discontinuous ring presenting along its circumference a plurality of projecting portions (18') between which remains a gap (19') or a break in height.

3. A thermomechanical part according to claim 1 or 2, **characterized in that** the wiper (10') has at least three projecting portions (18').

4. A thermomechanical part according to any one of the claims 1 to 3, **characterized in that** it constitutes the rotor of a turbomachine.

5. A turbomachine comprising a thermomechanical part according to any one of the claims 1 to 4.

6. A method of fabricating an annular wiper (10 ; 10') on a thermomechanical support (20), in particular for a sealing labyrinth, comprising the following steps :
a) providing a support with circular symmetry about a longitudinal axis, the support presenting a base (12) of annular wiper (10 ; 10'),
b) providing at least one source of a powder material (35) and a spray nozzle (38) connected to said source and suitable for moving relative to the support (20),
c) providing a laser source (30) connected to an optical head (34) suitable for moving relative to the support (20) to focus the laser beam on a point of the surface of the support (20),
The method of fabrication being **characterized in that** it further comprises the following steps :
d) aiming both the optical head and the nozzle at a common point on the surface at the top of the base (12) of the wiper (10 ; 10'),
e) activating the laser source (30) and the source of powder material, thereby forming a localized melt at said point, into which the powder material is injected, thereby forming a localized region of extra thickness ;
f) aiming the optical head (34) and the nozzle (38) at another point on the surface at the top of the base (12) adjacent to said localized region of extra thickness, and back to step e) so long as the layer of material has not been finished for the angular sector in question, said wiper (10, 10') comprising a plurality of angular sectors, each containing a projecting portion, and said wiper presenting in radial direction a height which varies along its circumference thereby forming a plurality of projecting portions ; and
g) building each projecting portion of the wiper (10, 10') by depositing successive layers that become narrower and narrower in the longitudinal direction on the surface at the top of the base, each layer being the result of performing steps d) to f).

7. A method according to claim 6, **characterized in that**, during step g), the layers are smaller and smaller in the circumferential direction.

8. A method according to claim 6 or 7, **characterized in that**, during step d), the layers remain centered about an angular zone remote from the two gaps (19 ; 19') adjacent to the projecting portion (18 ; 18') for forming the tip of the projecting portion.

9. A method according to claim 6 or 8, **characterized in that**, during step g), the layers cover a circumferential end of the projecting portion (18 ; 18').

10. A method according to any one of the claims 6 to 9, **characterized in that**, during step f), the surface of the top of the base (12) of the wiper (10, 10') is followed in a longitudinal direction prior to changing angular sector.

11. A method according to any one of the claims 6 to 10, **characterized in that**, during step f), the laser source (30) and the source (35 ; 45) of powder material remain activated.

12. A method according to any one of the claims 6 to 11, **characterized in that** during step b), a first source (35) of a first powder material and a second source (45) of a second powder material are provided, said first source (35) and said second source (45) being connected to the spray nozzle (38).

13. A method according to claim 12, **characterized in that** the first material (35) is identical to that of the support (20) and **in that** the second material (45) is harder than the first material (35).

14. A method according to claim 12 or 13, **characterized in that** during step g), each layer of the angular sector in question is the result of performing the following sub-steps :
g1) forming on the surface of the base (12) of the wiper (10 ; 10') (10) at least two angular beads (13a) with the second powder material (45) because, during step f), the optical head (34) and the nozzle (38) are moved angularly over the circumference relative to the previously-obtained localized region of extra thickness ; and
g2) filling a zone (15a) situated between the two angular beads (13a) with the first powder material (35).

15. A method according to any one of the claims 12, 13 and 14, **characterized in that**, during step e), the first source (35) and the second source (45) of powder material are activated simultaneously so that the nozzle (38) sprays a mixture of powder materials.

16. A method according to any one of the claims 6 to 15, **characterized in that** the optical head (34) and the spray nozzle (38) are secured to each other in a common spray assembly of position that is adjustable relative to the support (20).

17. A method according to any one of the claims 6 to 16, **characterized in that** said support (20) is a thermomechanical turbomachine part that is circularly symmetrical about a longitudinal axis (X-X').

18. A method according to any one of the claims 6 to 17, **characterized in that**, in step f), the angular sector in question defines a projecting portion (18 ; 18') between two gaps (19 ; 19').

## Patentansprüche

1. Um eine Längsachse umlaufendes thermomechanisches Teil einer Turbomaschine, das wenigstens eine für eine Labyrinthdichtung bestimmte ringförmige Dichtungszunge (10') aufweist, wobei die Dichtungszunge (10') mit einem Abriebmaterial beschichtet ist,
**dadurch gekennzeichnet, daß** die Dichtungszunge (10') in radialer Richtung entlang ihres Umfangs eine variable Höhe durch Bildung mehrerer vorspringender Teile (18') aufweist, zwischen denen ein Zwischenraum (19') bestehen bleibt und die jeweils eine Höhe aufweisen, die von einem Zwischenraum (19') bis zu einer Spitze schrittweise zunimmt und von der Spitze bis zum nächsten Zwischenraum (19') schrittweise abnimmt.

2. Thermomechanisches Teil nach dem vorhergehenden Anspruch, **dadurch gekennzeichnet, daß** die Dichtungszunge (10') einen unterbrochenen Ring bildet, der entlang seines Umfangs mehrere vorspringende Teile (18') aufweist, zwischen denen ein Zwischenraum (19') oder eine Unterbrechung in der Höhe bestehen bleibt.

3. Thermomechanisches Teil nach Anspruch 1 oder 2, **dadurch gekennzeichnet, daß** die Dichtungszunge (10') wenigstens drei vorspringende Teile (18') aufweist.

4. Thermomechanisches Teil nach einem der Ansprüche 1 bis 3, **dadurch gekennzeichnet, daß** es den Rotor einer Turbomaschine bildet.

5. Turbomaschine mit einem thermomechanischen Teil nach einem der Ansprüche 1 bis 4.

6. Verfahren zur Herstellung einer ringförmigen Dichtungszunge (10; 10') an einem thermomechanischen Träger (20), insbesondere für eine Labyrinthdichtung, das die folgenden Schritte umfaßt:
a) Bereitstellen eines um eine Längsachse umlaufenden Trägers, der einen Sockel (12) der ringförmigen Dichtungszunge (10; 10') aufweist,
b) Bereitstellen wenigstens einer Quelle eines pulverförmigen Materials (35) und einer Spritzdüse (38), die mit der Quelle verbunden und geeignet ist, sich gegenüber dem Träger (20) zu bewegen,
c) Bereitstellen einer Laserquelle (30), die mit einem optischen Kopf (34) verbunden ist, welcher geeignet ist, sich gegenüber dem Träger (20) zu bewegen, um den Laserstrahl auf einen Punkt der Oberfläche des Trägers (20) zu fokussieren,
wobei das Herstellungsverfahren **dadurch gekennzeichnet ist, daß** es ferner die folgenden Schritte umfaßt:
d) Einstellen des optischen Kopfes und der Düse auf einen gleichen Punkt der Oberfläche des Scheitels des Sockels (12) der Dichtungszunge (10; 10'),
e) Aktivieren der Laserquelle (30) und der Quelle des pulverförmigen Materials, wodurch im Bereich des Punktes ein örtlich begrenztes Schmelzbad gebildet wird, in das das pulverförmige Material eingespritzt wird, wodurch es zur Bildung einer örtlich begrenzten Überdicke kommt,
f) Einstellen des optischen Kopfes (34) und der Düse (38) auf einen anderen Punkt der Oberfläche des Scheitels des Sockels (12), welcher der örtlich begrenzten Überdicke benachbart ist, und Zurückkehren zu Schritt e) solange die Materialschicht für den betrachteten Winkelsektor nicht vollendet ist, wobei die Dichtungszunge (10; 10') mehrere Winkelsektoren aufweist, die jeweils ein vorspringendes Teil enthalten, und wobei die Dichtungszunge in radialer Richtung entlang ihres Umfangs eine variable Höhe durch Bildung mehrerer vorspringender Teile aufweist, und
g) Ausbilden eines jeden vorspringenden Teils der Dichtungszunge (10; 10') durch sukzessives Abscheiden von in Längsrichtung immer schmaleren Schichten auf der Oberfläche des Scheitels des Sockels, wobei jede Schicht aus der Durchführung der Schritte d) bis f) hervorgeht.

7. Verfahren nach Anspruch 6, **dadurch gekennzeichnet, daß** während des Schrittes g) die Schichten in Umfangsrichtung immer mehr reduziert werden.

8. Verfahren nach Anspruch 6 oder 7, **dadurch gekennzeichnet, daß** während des Schrittes g) die Schichten um einen Winkelbereich zentriert bleiben, der von den dem vorspringenden Teil (18; 18') benachbarten beiden Zwischenräumen (19; 19') beabstandet und dazu bestimmt ist, die Spitze des vorspringenden Teils zu bilden.

9. Verfahren nach Anspruch 6 oder 8, **dadurch gekennzeichnet, daß** während des Schrittes g) die Schichten ein Umfangsende des vorspringenden Teils (18; 18') bedecken.

10. Verfahren nach einem der Ansprüche 6 bis 9, **dadurch gekennzeichnet, daß** während des Schrittes f) die Oberfläche des Scheitels des Sockels (12) der Dichtungszunge (10; 10') in einer Längsrichtung überfahren wird, bevor der Winkelsektor gewechselt wird.

11. Verfahren nach einem der Ansprüche 6 bis 10, **dadurch gekennzeichnet, daß** im Laufe des Schrittes f) die Laserquelle (30) und die Quelle (35; 45) des pulverförmigen Materials aktiviert bleiben.

12. Verfahren nach einem der Ansprüche 6 bis 11, **dadurch gekennzeichnet, daß** während des Schrittes b) eine erste Quelle (35) eines ersten pulverförmigen Materials und eine zweite Quelle (45) eines zweiten pulverförmigen Materials bereitgestellt wird, wobei die erste Quelle (35) und die zweite Quelle (45) mit der Spritzdüse (38) verbunden sind.

13. Verfahren nach Anspruch 12, **dadurch gekennzeichnet, daß** das erste Material (35) mit dem des Trägers (20) identisch ist und daß das zweite Material (45) härter als das erste Material (35) ist.

14. Verfahren nach Anspruch 12 oder 13, **dadurch gekennzeichnet, daß** im Laufe des Schrittes g) jede Schicht des betrachteten Winkelsektors aus den folgenden Unterschritten hervorgeht:
g1) auf der Oberfläche des Sockels (12) der Dichtungszunge (10; 10') werden wenigstens zwei Winkelstränge (13a) mit dem zweiten pulverförmigen Material (45) **dadurch** gebildet, daß im Laufe des Schrittes f) der optische Kopf (34) und die Düse (38) gegenüber der zuvor erhaltenen, örtlich begrenzten Überdicke über den Umfang winkelig versetzt werden, und
g2) ein zwischen den beiden Winkelsträngen (13a) befindlicher Bereich (15a) wird mit dem ersten pulverförmigen Material (35) gefüllt.

15. Verfahren nach einem der Ansprüche 12, 13 und 14, **dadurch gekennzeichnet, daß** während des Schrittes e) die erste Quelle (35) und die zweite Quelle (45) pulverförmigen Materials gleichzeitig aktiviert werden, so daß die Düse (38) eine Mischung aus den pulverförmigen Materialien aufspritzt.

16. Verfahren nach einem der Ansprüche 6 bis 15, **dadurch gekennzeichnet, daß** der optische Kopf (34) und die Spritzdüse (38) in einer gleichen Spritzeinheit, deren Position gegenüber dem Träger (20) einstellbar ist, fest miteinander verbunden sind.

17. Verfahren nach einem der Ansprüche 6 bis 16, **dadurch gekennzeichnet, daß** der Träger (20) ein um eine Längsachse (X-X') umlaufendes, thermomechanisches Teil einer Turbomaschine ist.

18. Verfahren nach einem der Ansprüche 6 bis 17, **dadurch gekennzeichnet, daß** bei Schritt f) der betrachtete Winkelsektor ein vorspringendes Teil (18; 18') zwischen zwei Zwischenräumen (19; 19') begrenzt.
